Europäisches Patentamt

European Patent Office

Office européen des brevets

(11) Numéro de publication: **0 214 889**
**A1**

## (12) DEMANDE DE BREVET EUROPEEN

(21) Numéro de dépôt: 86401742.1

(22) Date de dépôt: 04.08.86

(51) Int. Cl.⁴: **G 11 B 23/023**
**G 06 K 17/00**

(30) Priorité: 12.08.85 FR 8512292

(43) Date de publication de la demande:
**18.03.87 Bulletin 87/12**

(84) Etats contractants désignés:
**BE CH DE FR GB IT LI LU**

(71) Demandeur: **Malenfant, Patrick**
**2, rue Eugène Flachat**
**F-78100 Saint-Germain-en-Laye (FR)**

(72) Inventeur: **Malenfant, Patrick**
**2, rue Eugène Flachat**
**F-78100 Saint-Germain-en-Laye (FR)**

(74) Mandataire: **Bonnetat, Christian et al**
**Cabinet PROPI Conseils 23 rue de Léningrad**
**F-75008 Paris (FR)**

(54) **Procédé et dispositif pour l'enregistrement de données dont l'authentification doit tre assurée.**

(57) L'invention concerne un procédé et un dispositif pour l'enregistrement et la conservation inviolable de données notamment sur supports magnétiques.

La succession des images et/ou sons est enregistrée sur un support magnétique et ce dernier est rendu inviolable par insertion dans un boîtier en matière synthétique constitué d'un coffret (2a) et d'un couvercle (2b); le coffret et le couvercle ainsi que le support d'enregistrement comportent des perforations en regard constituant une lumière apte à recevoir une tige ou vis (8) formant un verrou dont l'extremité (13) coopére avec des moyens de verrouillage constituésd'un lien (18) avec plombage (20) et d'une languette (14) formant clavette et munie d'un oeillet (16) apte à être engagé sur la dite extremité (13), une partie resserrée venant se bloquer dans la gorge (8a) de ladite extremité (13); l'ensemble est recouvert par une calotte (21) bloquée par engagement et clipsage d'un rebord (25) derrière les languettes (23. 24) venues dans les parois d'une cuvette (17) réceptrice de ladite calotte (21).

Fig. 1

**Description**

Procédé et dispositif pour l'enregistrement de données dont l'authentification doit être assurée.

La présente invention concerne un procédé et un dispositif pour la mise en oeuvre du procédé en vue d'assurer la saisie, l'enregistrement et la conversation de données constituées d'une succession d'images et ceci dans des conditions permettant d'assurer l'inviolabilité du support et l'authenticité des données ainsi enregistrées et stockées.

L'intérêt du procédé et du dispositif est de permettre la conservation à la fois d'un texte qui peut être cumulativement sonore (parlé) et écrit ainsi que d'une pluralité d'images, éventuellement d'images animées constituées d'un film enregistré dans ce cas sur une bande du type cassette vidéo.

Les circonstances sont nombreuses dans lesquelles il est nécessaire de ménager une preuve d'une situation de fait qui peut être constatée par une prise d'images accompagnée d'un commentaire constituant un texte illustrant et soulignant les parties caractéristiques des images prises.

On citera parmi les exemples d'application du procédé et du dispositif de l'invention, les circonstances suivantes.

En premier lieu l'inventaire de biens mobiliers appartenant à un particulier ou à une entreprise et dont la consistance matérielle d'une part et les caractéristiques spécifiques d'autre part doivent être indentifiées afin d'en assurer l'existence et la valeur : une telle circonstance peut se rencontrer dans le cadre de la souscription d'un contrat d'assurance mobilière contre l'incendie et/ou le vol.

En cas d'innovation technologique (secret de fabrique) l'entreprise a intérêt à fixer et conserver la preuve matérielle de son savoir faire dans des conditions assurant à la fois un exposé et une démonstration complète d'un procédé ou d'un tour de main, l'authenticité de la date de la constatation et de son contenu mais aussi la conservation du secret entre les mains de l'entreprise.

Dans le cas d'une location meublée ou non, l'intérêt du procédé et du dispositif de l'invention sont également transposables d'une façon générale toute location supposant la prise de possession temporaire d'un immeuble ou d'un bien peut faire l'objet d'un contrat sur images enregistrées selon le procédé et le dispositif de l'invention, par exemple pour la location d'un voilier, d'un bateau, d'une caravane, home mobile etc...

L'invention trouvera également son application dans le domaine industriel ou immobilier à l'occasion de la réception de travaux ou de la sortie d'usine d'une machine en fin de construction, le constat sur image avec enregistrement et commentaires sonores, mettant en oeuvre le dispositif d'inviolabilité de l'invention permettra de constater de façon authentique et évitant toutes contestations, sur l'état physique de l'immeuble ou des travaux, ou encore de la machine (existence ou consistance des composants et surtout état de fonctionnement, la prise de vue pouvant se faire sur la machine en cours de fonctionnement).

L'invention utilise, en les combinant à des moyens nouveaux, des moyens connus constitués essentiellement d'une caméra d'enregistrement sonore et de prise de vue enregistrés sur une cassette du type vidéo.

Mais l'invention n'est pas limitée à l'emploi de ce matériel d'enregistrement et tout moyen de prises de vue et d'enregistrement, d'images animées, sur un support physique tel que disquettes, bandes, films etc... pourra être utilisé dans le cadre de la présente invention.

Le problème lié à l'enregistrement d'images est celui de l'authentification des données ainsi fixées quant à leur contexte personnel notamment dans le cas où les images enregistrées sont ou doivent être associées à la présence d'une personne intéressée, la participation des intéressés à la prise d'images, rendues ensuite inviolables donne au document un caractère définitivement contradictoire. Encore faut-il que la bande vidéo soit soustraite à toute manipulation.

Même si des repères ou des scellés sont apposés sur la cassette, il reste toujours la possibilité de modifier l'enregistrement par simple dégagement de la bande par une face de la cassette, la bande pouvant être permutée avec une autre qui sera recollée bout à bout sur les amorces restées solidaires des tambours, ou repassée dans un magnétoscope avec substitution ou interposition de sons ou d'image.

Il faut supposer en réalité que la cassette unique résultant de la prise de vue effectuée contradictoirement, soit immédiatement placée entre les mains d'un tiers constitué sequestre tel qu'un officier ministériel ce qui alourdit considérablement la procédure.

Et dans de nombreuses circonstances, l'intéressé souhaitera rester détenteur de la cassette notamment s'il s'agit d'une prise de vue de son intérieur (location meublée; assurance) ; ou de la constatation d'un procédé industriel secret.

Il est donc souhaitable de disposer d'un procédé et d'un dispositif associé à la mise en oeuvre du procédé permettant d'assurer une prise de vue et une conversation des images ainsi saisies dans des conditions qui permettent d'assurer la détention du support unique par une des parties intéressées tout en assurant d'une part le caractère incontestable du contenu des images et des données ainsi enregistrées et d'autre part le stockage du support dans des conditions excluant physiquement toutes interventions susceptibles de modifier la consistance des données stockées sur le support.

A cet effet, l'invention concerne un procédé de saisie, d'enregistrement et de conservation de données constituées d'une succession d'images sur un support tel qu'un support magnétique, notamment bandes magnétiques, en vue de la constitution de preuves documentaires personnalisées, telle qu'un témoignage ou constat, le procédé est caractérisé en ce que l'on procède à des prises de vues successives de façon à enregistrer sur le même support d'enregistrement des images des personnes concernées dont les identités sont ainsi authentifiées et des images des choses ou scènes objet du témoignages ou du constat, ainsi associées à l'image des personnes, et en ce que ledit support magnétique est ensuite rendu inviolable et soustrait à toute manipulations et modifications des données enregistrées par mise sous scellés au moyen d'un organe de verrouillage s'opposant physiquement à tout accès à la bande, et à cet effet le support d'enregistrement magnétique tel qu'une bobine ou cassette est introduit dans un boîtage en matériau rigide de forme convenable tel qu'un coffret en matière synthétique et ou engage un verrou, apte à s'opposer tant à l'ouverture du coffret qu'à la manipulation du support magnétique au-travers des parois d'une part dudit coffret et d'autre part dudit support tel que bobine ou ou cassette, ce verrou étant scellé par au moins une extrêmité libre.

Selon une autre caractéristique du procédé de l'invention on utilise un appareil d'enregistrement d'images avec dispositif d'enregistrement synchrone des sons de sorte que l'enregistrement des images des personnes concernées et de l'objet du constat ou du témoignage s'accompagne de l'enregistrement de leurs commentaires sur le témoignage ou le constat, l'image et la voix des auteurs étant ainsi enregistrées sur un document unique.

L'invention concerne encore un dispositif pour la mise en oeuvre du procédé et caractérisé en ce qu'il est constitué d'un support d'enregistrement magnétique tel que bande, carte ou disquette, solidaire, de façon connue, d'un cadre physique de protection tel que cassette, bobine ou pochette, et le dispositif comporte d'autre part un conteneur tel qu'un coffret récepteur dudit support et de son cadre, deux parois opposées dudit boîtier d'une part et ledit cadre d'autre part comportant chacun une perforation, lesdites perforations étant prévues en concordance après mise en place du cadre dans le coffret, lesdites perforations constituant une lumière apte à recevoir une tige formant un verrou pourvue d'une tête à une extrêmité et apte à traverser ladite lumière, la tête venant en butée contre une paroi dudit boîtier et l'extrémité libre opposée débordante au-delà de la paroi opposée du boîtier et étant apte à recevoir un dispositif de verrouillage inviolable.

Et de préférence ce dispositif de verrouillage inviolable est constitué d'une gorge disposée sur la tête de la vis débourdant au-delà de la paroi du coffret et apte à recevoir une clavette dont deux branches coulissantes étant immobilisées dans la gorge et en portant contre la paroi du coffret s'opposant ainsi au retrait de la vis à travers le coffret.

Plus spécialement ladite clavette est constituée d'une languette comportant un oeillet ou boutonnière, dont une partie de plus grand diamètre permet l'engagement sur la tête de la vis tandis qu'une partie plus étroite est apte à être engagée dans ladite gorge dans la position de clavetage de la vis.

L'ensemble de verrouillage est avantageusement complété par un plombage témoin traversant de façon connue un oeilleton ou canal diamétral traversant l'extrémité terminale de la vis.

Selon encore un développement de l'invention, le conteneur est constitué d'un coffret en matière synthétique rigide transparente, de forme générale parallélépipédique, dont les angles dièdres formés par la rencontre entre deux faces adjacentes sont arrondis, les deux faces étant réunies par une section de cylindre dont le rayon est supérieur à une fois l'épaisseur de la paroi du conteneur et de préférence supérieur à deux fois au moins pour le rayon reliant les faces extérieures du conteneur.

Selon encore un autre développement, le dispositif ci-dessus est en outre caractérisé en ce qu'il comporte également un manchon formé d'une feuille repliée sur elle-même pour constituer une boucle fermée, dont les deux extrémités se chevauchent et sont aptes à être solidarisées ensemble par des organes de verrouillages amovibles, assurant l'inviolabilité du conteneur, ladite feuille étant ainsi apte à recevoir des inscriptions, messages ou annotations sur l'une et/ou l'autre de ses faces, inscriptions aptes à apparaître à travers la paroi transparente du coffret ou conteneur.

De préférence le dispositif de verrouillage ci-dessus comporte encore un ensemble de protection de la tête de vis de plombage débordant au-delà d'une paroi du conteneur, et ce dispositif est constitué d'une calotte apte à coiffer la tête de la vis munie de son dispositif de plombage, les bords de ladite calotte, tournés vers la paroi du coffret, comportant un épaulement coopérant avec des moyens de clipsage constitués des pétales venues de ladite paroi, les bords des pétales étant élastiquement déformables et recourbés de façon à venir se bloquer derrière ledit épaulement formant logement récepteur en assurant ainsi le positionnement inamovible de ladite calotte de protection.

Et selon une variante la calotte de protection de tête de la vis est elle même insérée dans une cuvette formé d'un logement en creux venu de moulage dans la paroi du coffret et contenant d'une part la tête de la vis traversant le fond de la cuvette les bords de ladite cuvette comportant les languettes de clipsage coopérant dans l'épaulement venu de ladite calotte et orienté vers lesdits bords.

De préférence encore la calotte est dépourvue d'arête vive permettant la vision des pièces situées sous la calotte sans solution de continuité susceptible de cacher une effraction réparée dans la continuité de la paroi de la calotte.

Et de préférence encore ladite calotte est constituée en matière transparente rigide et fragile telle que le verre ou une résine de synthèse et elle comporte en son centre une zone plus faible permettant par rupture d'accèder ou système de verrouillage en fin de stockage.

Et de préférence la perforation pratiquée sur la paroi de coffret et correspondant à la sortie de la tête de la vis est disposée dans le fond de la cuvette en position excentrée et la clavette de verrouillage de la vis est constituée d'une lamelle comportant sur une extrémité ledit oeillet de clavetage engagé sur la tête de la vis et sur sa partie opposée la lamelle est recourbée de façon à conformer une came apte à subir la poussée de la calotte engagée en position de clipsage dans la cuvette pour repousser ladite lamelle dans une position telle que la partie étroite de l'oeillet se trouve repoussée et maintenue en position de clavetage sur la vis, ladite lamelle coopérant avec des moyens de guidage permettant son coulissement linéaire sur la tête de la vis s'opposant à sa rotation angulaire autour de cette tête lesdits moyens de guidage sont par exemple constitués d'un pontet sous lequel la lamelle de clavetage est apte d'être engagé.

D'autres caractéristiques et avantages de l'invention ressortiront encore de la description qui suit et qui est donnée à titre d'exemple non limitatif en se référant aux dessins annexés.

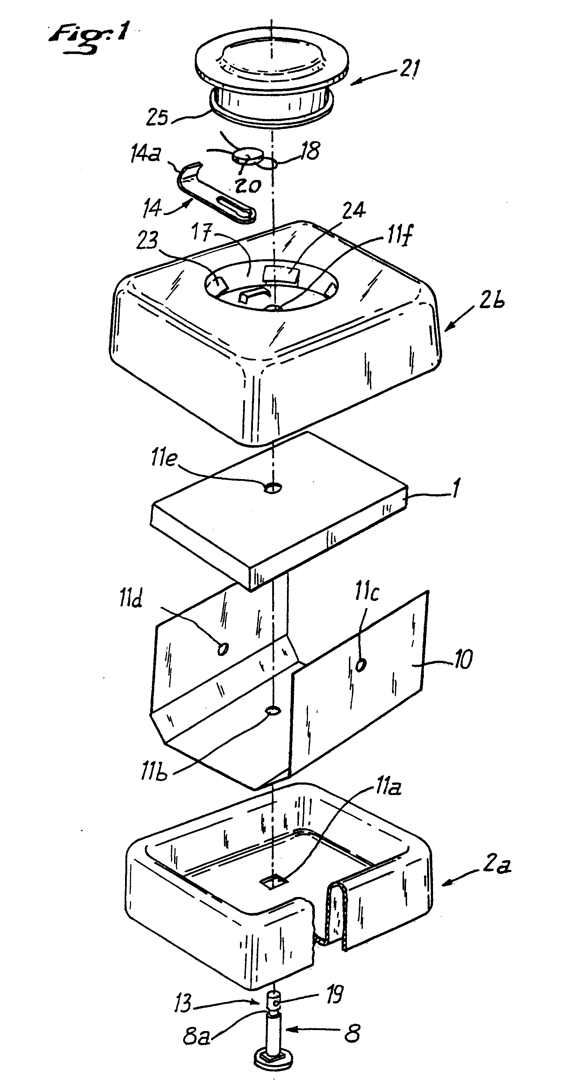

La figure 1 représente une vue éclatée de l'ensemble du dispositif selon l'invention et en montrant les diverses parties.

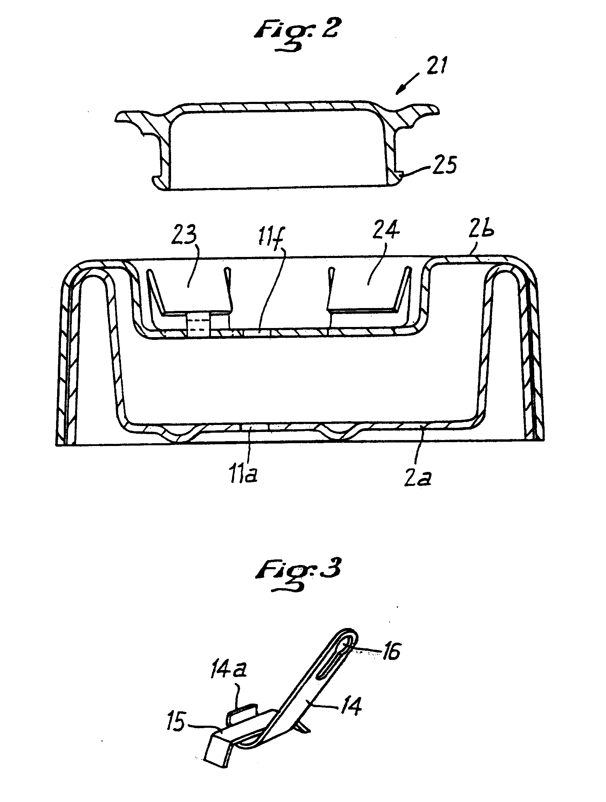

La figure 2 représente une vue de détail en coupe respectivement du boitier et du couvercle composant le coffret et de la calotte de protection.

La figure 3 montre un détail du mouvement d'insertion de la clavette dans son pontet de guidage.

Le support d'enregistrement 1 est constitué d'une bande magnétique du type vidéo et sur laquelle ont été enregistrées des scènes dans le cadre de prises de vues auxquelles auront participé directement les personnes intéressées.

La prise de vue permet la saisie et l'enregistrement des renseignements complets intégrant dans l'ensemble des données ainsi stockées, toutes les informations et identifications assurant l'authenticité de l'enregistrement et des circonstances notamment personnelles quant à l'identité des intéressés.

A l'occasion de la prise de vue destinée à constituer le constat ou l'enregistrement du témoignage, l'opérateur qui pourra être mandaté par une Compagnie d'Assurance ou par une personne concernée tel un propriétaire ou son locataire, un vendeur ou son utilisateur, etc., filme quelques secondes sa propre image dans une glace puis déplace sa caméra vers le ou les visages des interlocuteurs pour effectuer ensuite un panorama complet de l'objet du constat, qu'il s'agisse d'un intérieur, d'un ensemble de biens immobiliers, d'un site, de travaux immobiliers, d'un appareillage ou de la mise en oeuvre d'un procédé.

Et l'identité (dans les conditions particulièrement authentiques) des intéressés étant ainsi enregistrée, les faits ou les données visuels constatés peuvent alors s'accompagner de commentaires de sorte que l'enregistrement sonore authentifie également par la vois les données enregistrées; à cet effet au moment de la prise d'images initiales concernant les personnes intéressées, ces derniers peuvent de préférence procéder à leur auto-présentation en déclinant leur identité.

Dans certains cas l'intéressé possesseur d'un matériel de prise de vue pourra, hors de la présence du représentant de la Compagnie d'Assurance, filmer seul sa propre image et l'inventaire visuel de son mobilier à condition que ce tournage soit effectué en continu: c'est-à-dire que les plans successifs représentants l'environnement, les objets les détails devront dans ce cas être reliés entre eux par le seul déplacement de la caméra ou de l'objectif.

C'est pour ces raison qu'à chaque arrêt technique, il sera nécessaire avant même de poursuivre cet inventaire, de faire un retour arrière dans la description du sujet en doublant les plans de référence fixes appartenants au cadre de son habitation, de façon à garantir la continuité parfaite du constat. Dans ces conditions de restitution proche à celle d'un huissier (l'oeil électronique valant l'oeil humain) le contrôle des lieux n'est plus immédiatement nécessaire et peut donc être reporté à plus tard, la validité de l'enregistrement, au moment de son ouverture, étant garanti par le simple recoupement d'au moins une partie des séquences de cet enregistrement avec les points de repéres fixes restant sur les lieux.

C'est pour obtenir cette validité finale qu'il sera cependant nécessaire de faire constater devant le représentant de la Compagnie d'Assurance, ou devant huissier la fermeture de la cassette (et non son contenu) de façon à assurer le départ de validité du constat. Cette simple constatation remplaçant le dépôt et la conservation contradictoire par l'assureur.

On pourra également authentifier la date de la prise de vue par passage de l'image sur un journal du jour; ceci n'exclut évidemment pas que la prise de vue soit postérieure à la date du journal mais elle authentifie que la prise de vue ne peut pas lui être antérieure. La bande magnétique et son support (cassette) sont insérés dans un coffret 2 constitué ici d'un conteneur en deux parties, à savoir un boîtier inférieur 2a et un couvercle 2b.

Selon une caractéristique de l'invention, les parois adjacentes du coffret parallélépipédiques se rencontrent selon des angles dièdres arrondis constituant en réalité des sections de cylindre, le rayon de cette section de cylindre étant supérieur à l'épaisseur de la paroi du coffret.

Cette caractéristique permet d'assurer que la vue du contenu du coffret, depuis l'extérieur et à travers la paroi, est assurée de façon continue sans laisser apparaître au niveau des angles une solution de continuité ou ligne de discontinuité tenant à la réfraction des rayons lumineux.

Il apparaît en effet dans le cadre de l'utilisation d'un boîtier en matière synthétique de forme géométrique notamment paréllélépipédique et à angles droits, au sommet d'une paroi et à proximité de l'arête, apparaît une ligne correspondant à la vue en transparence de la paroi adjacente; cette ligne peut se confondre éventuellement et en la cachant, avec lune ligne provenant d'une effraction dans la paroi du coffret qui aurait été réparée par scellage, soudure, collage ou autres.

Et dans ces conditions l'utilisation d'un coffret parallélépipédique à angle vif laisseraient subsister une possibilité de fraude, c'est-à-dire d'ouvertures dans la paroi du coffret en découpant soigneusement cette paroi à proximité immédiate de ses bords et en recollant cette paroi, la ligne de collage étant alors absorbée et confondue avec la ligne qui apparaît naturellement à proximité du bord de cette face et correspondant à la vue de la paroi adjacente et située directement derrière la face examinée.

Grâce à l'utilisation d'un coffret tel que défini ci-dessus, on supprime toute possibilité de violation.

Et en même temps on permet une lecture directe et sans discontinuité des informations qui peuvent être portées sur une bande 10 enveloppant la cassette 1 et insérée dans le boîtier directement derrière la paroi de ce dernier.

Cette bande est réalisée à partir d'une feuille en matériau semi rigide (carton, plastique etc...) de développé suffisant pour permettre d'obtenir, par pliage, à la fois la fermeture de la bande et au moins le chevauchement complet d'une de ses plus grandes faces; la longueur de cette bande étant commandée par la longueur des renseignements à inscrire. Ladite bande 10 comportant au minimum trois orifices 11b, 11c, 11d, susceptibles de venir en concordance avec les lumières aménagées dans la cassette, 11e et les lumières 11a et 11f pratiquées sur le boîtier 2a et le couvercle 2b de manière à autoriser le libre passage de la vis 8 au travers des différents empilages. Le rôle de la bande 10 est d'assurer à la fois la protection physique du support qu'elle est chargée d'entourer, l'auto-protection des dépositions manuscrites enregistrées sur la face intérieure au pliage sous la forme d'un certificat d'authenticité et enfin de fournir sur la face extérieure laissée visible par l'absence de chevauchement, les seuls renseignements propres à son identification (numéro, date, destination, etc...).

Selon l'invention, le coffret comporte encore un dispositif de protection du système de verrouillage c'est-à-dire de l'extrêmité libre 13 de la vis 8 pourvue du canal 19 traversé par le lien 18 associé au plomb 20.

Le verrouillage de la vis 8 est obtenu par insertion et immobilisation dans la gorge, 8a de la clavette 14 dont la tête recourbée 14 a est engagée sous le pontet 15 après quoi l'oeillet 16 peut recevoir par sa partie la plus large l'extrémité libre 13 de la vis 8 ; le coulissement extérieur de la clavette amène la partie étroite de l'oeillet en position d'engagement dans la gorge 8a de l'extrémité libre de la vis et cette dernière se trouve ainsi verrouillée.

Un plombage 18 traversant le canal 19 sert de témoin d'inviolabilité.

La protection physique de l'ensemble de verrouillage est obtenue par la calotte 21 apte à s'engager dans la cuvette 17 formée d'un logement venue de moulage dans le couvercle 2b; la calotte est immobilisée définitivement dans la cuvette par le jeu de l'épaulement 25, orienté vers l'extérieur et disposé à la base des bords de la calotte de façon à s'engager derrière les languettes flexibles 23, 24 bordant la paroi périphérique de la cuvette 17, une fois engagé par clipsage derrière lesdites languettes ou pétales 23, 24, l'épaulement 25 ne peut plus être dégagé car les languettes ne sont pas accessibles.

La base de la paroi verticale de la calotte côté interne et en-dessous de l'épaulement 25, s'appuie sur le bord recourbé 14a de la clavette pour repousser cette dernière vers la position de clavetage (partie étroite de l'oeillet dans la gorge 8a) lorsque la calotte est mise en place; ainsi la position de clavetage de la clavette 14 est automatiquement assurée lorsque la calotte est mise en place dans la cuvette réceptrice.

Le pontet 15 s'oppose par ailleurs à la rotation angulaire de la clavette qui pourrait entraîner son dégagement de la position de clavetage. Sa présence intacte est une garantie d'inviolabilité et il sert donc de témoin d'ouverture.

Une numérotation indélébile des éléments composants (boitier 2a, couvercle 2b et calotte 21) complète avantageusement la garantie et la sécurité attachées au dispositif selon l'invention.

La numérotation peut être remplacée par tout marquage approprié.

## Revendications

1 - Procédé de saisie, d'enregistrement et de conservation de données constituées d'une succession d'images sur un support tel qu'un support magnétique, notamment bandes magnétiques, en vue de la constitution de preuves documentaires personnalisées, telle qu'un témoignage ou constat, et le procédé est caractérisé en ce que l'on procède à des prises de vues succesives de façon à enregistrer sur un même support d'enregistrement des images des personnes concernées dont les identités sont ainsi authentifiées et des images des choses ou scènes objet du témoignage ou du constat, ainsi associées à l'image des personnes, et en ce que ledit support magnétique est ensuite rendu inviolable et soustrait à toutes manipulations et modifications des données enregistrées par mise sous scellés au moyen d'un organe de verrouillage s'opposant physiquement à tout accès à la bande. et à cet effet le support d'enregistrement magnétique tel qu'une bobine ou cassette et introduit dans un boîtage en matériau rigide de forme convenable tel qu'un coffret en matière synthétique et on engage un verrou, apte à s'opposer tant à l'ouverture du coffret qu'à la manipulation du support magnétique au-travers des parois d'une part dudit coffret et d'autre part dudit support tel que bobine ou cassette, ce verrou étant scellé par au moins une extrémité libre.

2- Procédé selon la revendication 1 Caractérisé en outre en ce que l'on utilise un appareil d'enregistrement d'images avec dispositif d'enregistrement synchrone des sons de sorte que l'enregistrement des images des personnes concernées et de l'objet du constat ou du témoignage s'accompagne de l'enregistrement de leurs commentaires sur le témoignage ou le constat, l'image et la voix des auteurs étant ainsi enregistrées sur un document unique.

3- Dispositif pour la mise en oeuvre du procédé selon l'une des revendications 1 ou 2 et caractérisé en ce qu'il est constitué d'un support d'enregistrement magnétique tel que bande, carte ou disquette, solidaire, de façon connue, d'un cadre physique de protection tel que cassette, bobine ou pochette, (1) et le dispositif comporte d'autre part un conteneur tel qu'un coffret (2a, 2b) récepteur dudit support et de son cadre, deux parois opposées dudit coffret d'une part et ledit cadre d'autre part comportant chacun une perforation, (11a, 11e) lesdites perforations étant prévues en concordance après mise en place du cadre dans le coffret, lesdites perforations constituant une lumière apte à recevoir une tige ou vis (8) formant un verrou pourvue à une extrémité d'une tête principale venant en butée contre une paroi dudit boîtier et l'extrémité libre opposée débordant au-delà de la paroi opposée du boîtier étant apte à recevoir un ensemble de verrouillage.

4 - Dispositif selon la revendication 3, et caractérisé en ce que l'ensemble de verrouillage inviolable est constitué d'une gorge (8 a) disposée sur l'extrémité libre (13) de la vis (8) débordant au-delà de la paroi du coffret et apte à recevoir une clavette (14) dont deux branches coulissantes étant immobilisées dans la gorge (8a) et en portant contre la paroi du coffret s'opposant ainsi au retrait de la vis à travers le coffret.

5 - Dispositif selon la revendication 4, caractérisé en ce que ladite clavette (14) est constituée d'une lamelle comportant un oeillet ou boutonnière (16) dont une partie de plus grand diamètre permet l'engagement sur l'extrémité (13) de la vis (8) tandis qu'une partie plus étroite est apte à être engagée dans ladite gorge (8a) dans la position de clavetage de la vis.

6 - Dispositif selon l'une des revendications 3, 4, ou 5, caractérisé en outre en ce qe le conteneur est constitué d'un coffret en matière synthétique rigide transparente, de forme générale parallélépipédique, dont les angles dièdres formés par la rencontre entre deux faces adjacentes sont arrondis, les deux faces étant réunies par une section de cylindre dont le rayon supérieur à l'épaisseur de la paroi du conteneur.

7 - Dispositif selon l'une des revendications 3, 4, 5 ou 6, et caractérisé en ce qu'il comporte également un manchon (10) formé d'une feuille repliée sur elle-même pour constituer une boucle fermée, dont les deux extrémités se chevauchent et sont aptes à être solidarisées ensemble par des organes de verrouillages amovibles (8), assurant l'inviolabilité du conteneur, ladite feuille (10) étant ainsi apte à recevoir des inscriptions, messages ou annotations sur l'une et/ou l'autre de ses faces, inscriptions aptes à apparaître à travers la paroi transparente du coffret ou conteneur.

8 - Dispositif selon l'une des revendications 3 à 7, ci-dessus et caractérisé en ce qu'il comporte encore un ensemble de protection des moyens de verrouillage (vis 8 et clavette 14) débordant au-delà d'une paroi du conteneur, et constitué d'une calotte (21) apte à coiffer l'extrémité (13) de la vis (8) munie de son dispositif de plombage et de verrouillage, les bords de ladite calotte tournés vers la paroi du coffret comportant un épaulement (25) coopérant avec des moyens de clipsage constitués de pétales (23, 24) venues de ladite paroi, les bords des pétales (23, 24) étant élastiquement déformables et aptes à venir se bloquer derrière ledit épaulement (25) formant logement récepteur des pétales en assurant ainsi le positionnement inamovible de ladite calotte de protection (21).

9 - Dispositif selon la revendication 8 ci-dessus et caractérisé en ce que la calotte (21) de protection de la tête de la vis est elle même insérée dans une cuvette (17) formé d'un logement en creux venu de moulage dans la paroi du coffret (2b) et contenant d'une part l'extrérmité libre (13) de la vis traversant le fonds de la cuvette, les bords de ladite cuvette comportant des languettes de clipsage 23, 24 coopérant avec l'épaulement (25) venu de ladite calotte et orienté vers lesdits bords.

10 - Dispositif selon la revendication 8, ou la revendication 9 et caractérisé en ce que le centre de ladite calotte est constituée d'une matière transparente rigide et fragile telle que le verre ou une résine de synthèse, et il est ainsi susceptible d'être brisé sans affecter la jupe périphérique, en permettant un accès aux moyens de verrouillage (18, 14) tout en conservant l'intégrité ainsi contrôlable des moyens d'engagement (23, 24) et 25 de ladite calotte de protection.

11 .- Dispositif selon l'une des revendications 1 à 10, caractérisé en ce que les éléments composants, à savoir boîtier 2a, couvercle 2b et calotte (21) comportent un marquage indélébile telle qu'une numérotation, dont l'identification est apte à être reportée sur la bande de garde (10).

Fig:1

86401742.1

*Fig. 2*

21

25

23    11f    24    2b

11a    2a

*Fig. 3*

14a

15    14    16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-4 489 832  (C.R. HELMS)<br>* Colonne 1, ligne 24  -  colonne 2, ligne 61; figures; abrégé * | 1,3 | G 11 B   23/023<br>G 06 K   17/00 |
| | --- | | |
| A | FR-A-2 545 305  (G. DRAHI)<br>* Résumé; figures * | 1,3 | |
| | --- | | |
| A | FR-A-2 138 317  (R. CIAIS)<br>* Page 2, ligne 9 - page 3, ligne 10;  page  4,  ligne 39 - page 5, ligne 38; page 6,  lignes  38-40; page  7, ligne 27 - page 8, ligne 7; figure 1 * | 1-3 | |
| | --- | | |
| A | US-A-4 285 429  (W.D. McTAVISH)<br>* Abrégé;  figures;  colonne 1, lignes 25-50 * | 1,3,11 | |
| | --- | | **DOMAINES TECHNIQUES RECHERCHES (Int. Cl.4)** |
| A | US-A-4 385 693  (A.L. GELARDI)<br>* Abrégé; figures * | 1,3,7 | G 11 B<br>G 06 K<br>G 07 C<br>E 05 B<br>B 65 D |
| | --- | | |
| A | US-A-3 532 211  (J.U. GELLERT)<br>* Abrégé; figures * | 1,6 | |
| | --- | | |
| A | EP-A-0 139 181   (D. LA PORTE) | | |
| | --- | | |
| A | DE-A-3 401 543   (R. STEINHOFF) | | |
| | ---          -/- | | |

Le présent rapport de recherche a été établi pour toutes les revendications

| Lieu de la recherche<br>**LA HAYE** | Date d'achèvement de la recherche<br>**24-11-1986** | Examinateur<br>**DAVID J.Y.H.** |
|---|---|---|

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl 4) |
|---|---|---|---|
| A | GB-A-2 118 145 (PERIPLAST) | | |
| | --- | | |
| E | FR-A-2 577 058 (P. MALENFANT) | 1-3,9-11 | |
| | * En entier * | | |
| | ----- | | |

DOMAINES TECHNIQUES RECHERCHES (Int. Cl.4)

Le present rapport de recherche a été etabli pour toutes les revendications

| Lieu de la recherche | Date d'achèvement de la recherche | Examinateur |
|---|---|---|
| LA HAYE | 24-11-1986 | DAVID J.Y.H. |